# EUROPÄISCHE PATENTANMELDUNG

(11) **EP 1 708 067 A1**
(43) Veröffentlichungstag der Anmeldung: **04.10.2006**
(21) Anmeldenummer: 06005293.3
(22) Anmeldetag: 15.03.2006
(51) Int. Cl.: G05D 23/19, G01K 15/00

(54) **Verfahren zur Herstellung eines Temperaturmesssystems sowie danach hergestelltes Temperaturmesssystem**

(30) Priorität: 23.03.2005 DE 102005013388
(71) Anmelder: Technotrans AG, 48336 Sassenberg (DE)
(72) Erfinder: Kulke, Andreas, 59269 Beckum (DE); Peick, Hubert, 59302 Oelde (DE)
(74) Vertreter: Steinmeister, Helmut

(57) **Zusammenfassung**

Verfahren zur Herstellung eines Temperaturmeßsystems in einer Temperiereinrichtung für industrielle Produktions- und Arbeitsverfahren, mit wenigstens einem Temperatursensor, der an eine Steuereinheit angeschlossen ist, die Befehlssignale an die Temperiereinrichtung abgibt, dadurch gekennzeichnet, dass
- der wenigstens eine Temperatursensor unter Laborbedingungen hinsichtlich seiner Abweichung von der physikalisch richtigen Temperatur vermessen wird;
- und dass die ermittelten Korrekturparameter in die Steuereinheit derart eingegeben werden, dass die abgegebenen Befehlssignale der Steuereinheit auf der physikalisch richtigen Temperatur basieren.

## Beschreibung

Die Erfindung betrifft ein Verfahren zur Herstellung eines Temperaturmeßsystems in einer Temperiereinrichtung für industrielle Produktions- und Arbeitsverfahren, mit wenigstens einem Temperatursensor, der an eine Steuereinheit angeschlossen ist, die Befehlssignale an die Temperiereinrichtung abgibt.

Zahlreiche industrielle Produktions- und Arbeitsprozesse erfordern eine Temperierung, zumeist eine Kühlung. So gibt es beispielsweise Wasser- und Öltemperiergeräte zur Werkzeugtemperierung in der Kunststoffindustrie, beispielsweise bei Extrudern oder Spritzgießmaschinen. In der Druckindustrie werden ebenfalls Wasser- und Öltemperiergeräte zur Temperierung von Druckwalzen oder Betriebsmitteln, wie etwa einem Feuchtmittel einer Offset-Druckmaschine verwendet. Ein weiteres Einsatzgebiet bildet die Pharma- und Lebensmittelindustrie.

Beim Temperiergerätebau wird im allgemeinen das Signal eines Temperatursensors als Eingangssignal einer Steuereinheit zugeführt. Eine Anpassung des Meßsignals an den physikalisch richtigen Temperaturwert erfolgt über die Hardware oder die Software. Diese Anpassung kann durch eine Zweipunkt-Kalibrierung geschehen, indem Offset und Gain justiert werden. Auf dem Markt erhältliche Temperatursensoren sind jedoch oft so ungenau, dass sie durch Korrektur eines Höhenversatzes (Offset) oder eines Steigungsfehlers (Gain) nicht über einen größeren Temperaturbereich von beispielsweise 10 bis 250°C auf physikalisch richtige Temperaturwerte eingestellt werden können. So können beispielsweise in unterschiedlichen Temperaturbereichen unterschiedliche Meßfehlertendenzen auftreten. Mit den genannten herkömmlichen Mitteln ist allenfalls eine genaue Einstellung auf einen oder auf zwei Meßpunkte möglich (Offset- und Gain-Kalibrierung).

Es ergeben sich also in der Praxis Probleme, wenn eine exakte und physikalisch richtige Temperaturmessung von Bedeutung ist, insbesondere in den Fällen, in denen mehrere Temperiergeräte bzw. Temperaturregelkreise in einem Gerät oder Prozeß zusammenwirken, beispielsweise im Spritzgießwerkzeug in der Kunststoffindustrie oder in einer Druckmaschine mit mehreren Temperaturregelkreisen.

In diesen Fällen können die gemessenen Temperaturen in den verschiedenen Geräten im Verhältnis zur physikalisch richtigen Temperaturkennlinie streuen, beispielsweise um +/- 1°C abweichen.

Temperatursensoren, die genaue Temperaturmessungen in einem wesentlich engeren Toleranzbereich ermöglichen, sind zwar verfügbar, jedoch für Temperiereinrichtungen mit gegebenenfalls einer größeren Anzahl von Temperatursensoren zu teuer.

Der Erfindung liegt die Aufgabe zugrunde, ein Verfahren zur Herstellung eines Temperaturmeßsystems sowie ein derartiges Temperaturmeßsystem zu schaffen, die es gestatten, die Genauigkeit der Temperaturerfassung innerhalb einer Temperiereinrichtung der genannten Art erheblich zu verbessern, ohne dass nicht mehr vertretbare zusätzliche Kosten entstehen.

Insbesondere soll die Genauigkeit der Temperaturmessung in Toleranzbereichen von +/- 0,05°C bis +/- 0,1°C liegen. Die Steigerung der Genauigkeit soll gleichmäßig über einen großen Temperaturbereich von beispielsweise 10°C bis 250°C erreicht werden.

Zur Lösung der gestellten Aufgabe ist das erfindungsgemäße Verfahren dadurch gekennzeichnet, dass
- der wenigstens eine Temperatursensor unter Laborbedingungen hinsichtlich seiner Abweichung von der physikalisch richtigen Temperatur vermessen wird;
- und dass die ermittelten Korrekturparameter in die Steuereinheit derart eingegeben werden, dass die abgegebenen Befehlssignale der Steuereinheit auf der physikalisch richtigen Temperatur basieren.

Das erfindungsgemäße Temperaturmeßsystem für Temperiereinrichtungen für industrielle Produktions- und Arbeitsverfahren weist wenigstens einen Temperatursensor auf, der an eine Steuereinheit angeschlossen ist, die Befehlssignale an die Temperiereinrichtung abgibt.

Das Temperaturmeßsystem ist dadurch gekennzeichnet, dass Korrekturparameter des Temperatursensors hinsichtlich einer Abweichung seiner Meßsignale von der physikalisch richtigen Temperatur in der Steuereinheit gespeichert sind, derart, dass die vom Temperatursensor aufgenommenen Meßsignale auf die physikalisch richtige Temperatur umrechenbar sind und die Befehlssignale auf dieser richtigen Temperatur basieren.

Erfindungsgemäß werden relativ preiswerte Temperatursensoren, z. B. Widerstandsthermometer oder Thermoelemente verwendet, und diese werden unter Laborbedingungen durch die Ermittlung numerischer Korrekturparameter hinsichtlich ihres Temperatursignals in bezug auf die physikalisch richtige Temperatur vermessen. Dies geschieht beispielsweise in einem Meßbereich von 10 bis 250°C. Die Vermessung über den gesamten Temperaturbereich von beispielsweise 10 bis 250°C ist dabei notwendig, da die Abweichung der Meßkennlinie gegenüber der physikalisch richtigen Temperatur aufgrund von Fertigungstoleranzen in unterschiedlichen Temperaturbereichen durchaus unterschiedlich sein kann. Korrekturparameter müssen daher über den gesamten Meßbereich ermittelt werden.

Die verwendete Steuereinheit der Temperiereinrichtung ist so ausgelegt, dass sie die Eingabe der Korrekturparameter eines jeden Temperatursensors gestattet. Die Steuereinheit ermöglicht es daher, die eingehenden Temperaturmeßsignale der einzelnen Temperatursensoren mithilfe der jeweiligen Korrekturparameter auf die physikalisch richtige Temperatur umzurechnen und die physikalisch richtige Temperatur für die Ermittlung der ausgehenden Befehlssignale zu berücksichtigen.

Auf diese Weise kann in der gesamten Temperiereinrichtung über alle verwendeten Temperatursensoren hinweg mit der physikalisch richtigen Temperatur gearbeitet werden. Toleranzen von +/- 0,05°C bis 0,1°C sind dabei erreichbar.

Bei einer Anlage mit mehreren Temperatursensoren können vorzugsweise die Korrekturparameter aller Sensoren in einer zentralen Steuereinheit gespeichert werden.

Die zumeist als erforderlich angesehene und übliche Offset- und Gain-Kalibrierung für jede einzelne Temperaturmeßstelle kann entfallen.

## Patentansprüche

1. Verfahren zur Herstellung eines Temperaturmeßsystems in einer Temperiereinrichtung für industrielle Produktions- und Arbeitsverfahren, mit wenigstens einem Temperatursensor, der an eine Steuereinheit angeschlossen ist, die Befehlssignale an die Temperiereinrichtung abgibt, **dadurch gekennzeichnet, dass**
- der wenigstens eine Temperatursensor unter Laborbedingungen hinsichtlich seiner Abweichung von der physikalisch richtigen Temperatur vermessen wird;
- und dass die ermittelten Korrekturparameter in die Steuereinheit der-art eingegeben werden, dass die abgegebenen Befehlssignale der Steuereinheit auf der physikalisch richtigen Temperatur basieren.

2. Verfahren nach Anspruch 1, **dadurch gekennzeichnet, dass** die Ermittlung der Korrekturparameter des Temperatursensors über einen Meßbereich von 10 bis 250°C erfolgt.

3. Verfahren nach Anspruch 1 oder 2, **dadurch gekennzeichnet, dass** alle Temperatursensoren einer Temperiereinrichtung an eine zentrale Steuereinheit angeschlossen werden, und dass alle Korrekturparameter in dieser Steuereinheit gespeichert werden.

4. Temperaturmeßsystem für Temperiereinrichtungen für industrielle Produktions- und Arbeitsverfahren, mit wenigstens einem Temperatursensor, der an eine Steuereinheit angeschlossen ist, die Befehlssignale an die Temperiereinrichtung abgibt, **dadurch gekennzeichnet, dass** Korrekturparameter des Temperatursensors hinsichtlich einer Abweichung seiner Meßsignale von der physikalisch richtigen Temperatur in der Steuereinheit gespeichert sind, derart, dass die vom Temperatursensor aufgenommenen Meßsignale auf die physikalisch richtige Temperatur umrechenbar sind und die Befehlssignale auf dieser richtigen Temperatur basieren.
